# FASCICULE DE BREVET EUROPEEN

(11) **EP 3 494 412 B1**
(45) Date de publication et mention de la délivrance du brevet: **19.04.2023**
(21) Numéro de dépôt: 17755439.1
(22) Date de dépôt: 03.08.2017
(51) Int. Cl.: G01S 17/89, G01S 17/93, G01S 7/51, G01S 17/42

(54) **SYSTÈME D'AIDE VISUELLE À LA CONDUITE**
VISUELLES FAHRASSISTENZSYSTEM
VISUAL DRIVING ASSISTANCE SYSTEM

(30) Priorité: 03.08.2016 FR 1601195
(43) Date de publication de la demande: 12.06.2019
(73) Titulaire: Valeo Comfort and Driving Assistance, 94046 Créteil Cedex (FR)
(72) Inventeur: GACHE, Stéphane, 94046 Créteil CEDEX (FR); ALBESA, Bruno, 94046 Créteil CEDEX (FR); GUENIN, Gérard, 94046 Créteil CEDEX (FR); CAMENEN, Alexandre, 94046 Créteil CEDEX (FR); LAFFERAYRIE, Jean-David, 94046 Créteil CEDEX (FR); MERMILLOD, Pierre, 94046 Creteil CEDEX (FR)
(74) Mandataire: Delplanque, Arnaud
(86) Numéro de dépôt international: PCT/EP2017/069750
(87) Numéro de publication internationale: WO 2018/024862

(56) Documents cités:
- FR-A1- 2 956 221
- US-A1- 2012 169 513
- US-A1- 2014 368 540
- US-A1- 2015 353 095

## Description

### DOMAINE TECHNIQUE AUQUEL SE RAPPORTE L'INVENTION

La présente invention concerne de manière générale le domaine des aides à la conduite de véhicules motorisés. Elle concerne plus particulièrement un système d'aide visuelle à la conduite pour conducteur de véhicule automobile.

### ARRIERE-PLAN TECHNOLOGIQUE

Pour faciliter et rendre plus sûre la conduite d'un véhicule automobile, on souhaite éviter que le conducteur ne soit forcé de détourner son regard de la route qu'il emprunte.

Pour cela, il est connu d'utiliser un afficheur tête-haute, adapté à projeter des informations (vitesse du véhicule, direction à suivre, ...) à la hauteur du regard du conducteur afin de l'aider dans sa conduite. Le document FR2956221 A1 divulgue un système lidar pour détecter des irrégularités sur la chaussée et permet une visualisation en deux dimensions dans le champ de vision du conducteur sur un affichage tête haute. La profondeur ou la hauteur des irrégularités est représentée par des intensités de couleur différentes.

Dans ce domaine des aides à la conduite de véhicules par affichage tête-haute, on connaît en particulier des dispositifs de génération d'images qui permettent l'affichage d'images en trois dimensions (3D).

### OBJET DE L'INVENTION

L'invention propose d'utiliser un affichage 3D pour informer le conducteur de l'état de surface de la chaussée de la voie de circulation sur laquelle il circule.

Plus particulièrement, on propose selon l'invention un système d'aide visuelle à la conduite pour un conducteur de véhicule automobile circulant sur une voie de circulation dans une direction déterminée, ledit système comportant au moins un capteur télémètre à balayage pour acquérir des données concernant la voie de circulation dans la direction déterminée, un calculateur configuré pour traiter les données acquises afin de produire des informations, et un afficheur tête-haute d'informations dans le champ de vision du conducteur en position de conduite.

Selon l'invention le calculateur est configuré pour extraire, à partir des données acquises, des informations concernant des modifications locales en surface de la voie de circulation et l'afficheur tête-haute haute est conçu pour afficher, au moyen d'un filtre auto-stéréoscopique dans le champ de vision du conducteur, une représentation tridimensionnelle desdites informations.

D'autres caractéristiques non limitatives et avantageuses du système conforme à l'invention, prises individuellement ou selon toutes les combinaisons techniquement possibles, sont les suivantes :
- lesdites modifications locales sont des transitions locales dans l'état en surface de la voie de circulation se produisant dans une zone de la voie de circulation dont la dimension maximale est inférieure à une valeur déterminée, de préférence inférieure à un mètre, dans la direction déterminée,
- lesdites informations sont transmises à l'afficheur tête-haute,
- de préférence, les transitions locales se produisent dans une zone de la voie de circulation dont la dimension maximale est inférieure à 1 m (voire inférieure à 50 cm) dans la direction déterminée,
- les transitions locales dans l'état en surface de la voie de circulation sont choisies parmi : une différence de hauteur supérieure à un seuil prédéterminé de différence de hauteur, une modification d'au moins une caractéristique optique dans ladite zone supérieure à un seuil prédéterminé de modification pour ladite au moins une caractéristique optique,
- le capteur est un télémètre laser à balayage, encore dit LIDAR (acronyme de « light détection and ranging »),
- le capteur LIDAR est disposé en un point haut de l'avant du véhicule, derrière une fenêtre transparente au moins pour la/les longueurs d'ondes optiques du LIDAR, ledit LIDAR produisant au moins un rayon lumineux rectiligne,
- ledit au moins un capteur et le calculateur sont en outre configurés pour déterminer des contours d'au moins un objet détecté par les transitions locales dans la direction déterminée, lesdits contours déterminés pouvant s'étendre latéralement à la direction déterminée,
- l'objet est notamment un marquage signalétique au sol, un obstacle volontaire (notamment gendarme couché), un obstacle accidentel (notamment ornières ou dos d'ânes ou flaques d'eau ou plaque de neige ou de glace ou de verglas ou déchets),
- le calculateur est en outre configuré pour ne transmettre les informations à l'afficheur tête-haute que pour un objet dont la dimension maximale dans la direction déterminée est inférieure à 1 mètre,
- l'afficheur tête haute est conçu pour afficher, pour le conducteur, lesdits contours en superposition sur l'objet détecté,
- le système comporte en outre un dispositif de restitution sonore et le calculateur est en outre configuré pour transmettre des informations sonores au dispositif de restitution sonore,
- le véhicule est choisi parmi : une automobile, un camion, un bus ou un autocar.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente une vue schématique d'un afficheur tête-haute permettant des affichages 3D,
- la figure 2 représente un véhicule circulant sur une voie de circulation et comportant un LIDAR, et
- la figure 3 représente un exemple d'affichage d'information dans le cas de la présence d'une ornière détectée par le LIDAR.

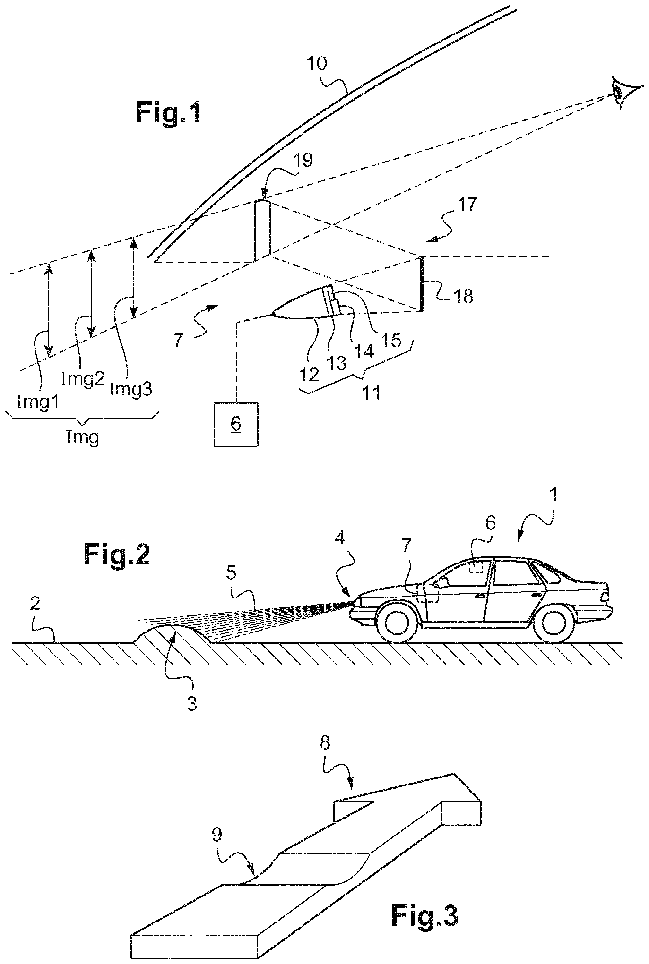

Sur la figure 1, on a représenté un afficheur tête-haute 3D 7 utilisable dans le cadre de l'invention et destiné à équiper un véhicule, par exemple un véhicule automobile de type voiture.

Cet afficheur tête-haute 7 comprend un dispositif de génération d'images 11 piloté par un calculateur 6, et un système optique de projection 17.

En pratique, le dispositif de génération d'images 11 comprend une source de lumière 12 et un modulateur de lumière 13 qui est adapté à moduler spatialement la lumière émise par la source de lumière 12 pour afficher une image.

Dans le mode de réalisation illustré sur la figure 1, le modulateur de lumière 13 est du genre « transmissif » : il comporte un écran d'affichage 13 transmissif et la source de lumière 12 est adaptée à rétroéclairer cet écran. En variante, le modulateur de lumière pourrait être du genre « réflectif ».

La source de lumière 12 est ici formée par un réseau coplanaire de diodes électroluminescentes, qui sont portées par un circuit imprimé.

Le modulateur de lumière 13 est quant à lui ici un écran à cristaux liquides (ou LCD pour "Liquid Crystal Display") à transistors en couche mince (ou TFT pour "Thin-Film Transistor"). Il présente une face d'entrée qui est plane, parallèle au plan du réseau de diodes électroluminescentes, et tournée vers ces diodes électroluminescentes. Il présente également une face de sortie opposée, qui est plane et par laquelle l'image peut être observée.

Comme le montre la figure 1, le modulateur de lumière 13 permet, sous le contrôle du calculateur 6, de générer une image que le système optique de projection 17 va pouvoir projeter dans le champ de vision du conducteur lorsque le regard de ce dernier sera tourné vers la voie de circulation 2.

Ce système optique de projection 17 est plus précisément conçu pour projeter une image virtuelle Img dans le champ de vision du conducteur du véhicule.

Il comporte à cet effet un système optique de renvoi 18 et une lame semi-transparente 19 placée dans le champ de vision du conducteur du véhicule. Il pourrait éventuellement aussi comporter une lentille de grossissement (non représentée).

Le système optique de renvoi 18, qui comporte ici uniquement un miroir de repliement, permet de renvoyer l'image générée par le dispositif de génération d'images 11 vers la lame semi-transparente 19.

La lame semi-transparente 19 permet de réfléchir cette image de telle manière qu'elle apparaisse au conducteur.

Ici, la lame semi-transparente 19 est de préférence un combineur disposé dans l'habitacle du véhicule automobile, entre le pare-brise 10 du véhicule et les yeux du conducteur. En variante, la lame semi-transparente pourrait être formée par le pare-brise lui-même.

La lame semi-transparente 19 comporte une vitre optique courbe transparente et semi-réfléchissante réalisant une fonction de grandissement. Ici, il s'agit d'une pièce injectée en polycarbonate, qui est incurvée de manière à agrandir la taille de l'image virtuelle Img vue par le conducteur.

Le calculateur 6 comprend quant à lui un processeur et une unité de mémorisation, par exemple une mémoire non-volatile réinscriptible ou un disque dur.

Comme le montre la figure 1, le calculateur 6 commande le dispositif de génération d'images 11 de telle manière que chaque image virtuelle Img projetée par le système optique de projection 17 soit vue par le conducteur comme étant constituée de points situés dans un nombre fini de plans frontaux distincts. Ce nombre peut être plus ou moins grand en fonction de la résolution spatiale désirée. Dans la suite, pour faciliter les explications, ce nombre sera pris par exemple égal à trois.

Le dispositif de génération d'images 11 peut afficher aussi bien des images en 3D qu'en 2D.

Chaque image Img sera alors élaborée de telle manière qu'elle comporte trois parties (appelées « calques Img1, Img2, Img3 ») qui seront interprétées par le cerveau du conducteur comme se trouvant comprises dans trois plans frontaux distincts, d'où l'affichage 3D.

Ainsi, le calque intermédiaire Img2 pourra être formé par la partie 2D de l'image. Il pourra notamment permettre d'afficher en continu des informations usuelles telles que la vitesse du véhicule ou la direction à suivre.

Les deux autres calques Img1, Img3 pourront quant à eux être formés par la partie 3D de l'image. Ils pourront notamment permettre d'afficher épisodiquement des informations. Le calque Img1 le plus éloigné pourra ainsi être utilisé pour signaler des obstacles, par exemple en affichant un cadre rouge entourant chaque obstacle. Le calque Img3 le plus proche du conducteur pourra quant à lui par exemple être utilisé pour signaler des problèmes relatifs au moteur ou à la circulation sur le trajet emprunté.

On va maintenant préciser succinctement la structure du dispositif de génération d'images 11 de l'afficheur tête-haute 7.

Le dispositif de génération d'images 11 comporte :
- un filtre auto-stéréoscopique 14, dont une face d'entrée est tournée vers la face de sortie de l'écran d'affichage 13, et qui s'étend en regard d'une partie seulement de la face de sortie de l'écran d'affichage 13, et
- une plaque de décalage de plan-image 15 qui est située en regard uniquement de la partie restante de la face de sortie de l'écran d'affichage 13.

Autrement formulé, le filtre auto-stéréoscopique 14 recouvre une partie de l'écran d'affichage 13 et la plaque de décalage de plan-image 15 recouvre au moins partiellement la partie restante de l'écran d'affichage 13.

De cette manière, l'image générée par le dispositif de génération d'images 11 comporte une zone perçue par le conducteur comme étant tridimensionnelle, et une autre zone perçue par le conducteur comme étant bidimensionnelle.

Le calculateur 6 est alors prévu pour commander l'affichage d'images par l'écran d'affichage 13 compte tenu des caractéristiques du filtre auto-stéréoscopique 14 et de sa position, de manière que les images virtuelles Img vues par le conducteur soient nettes.

Le filtre auto-stéréoscopique 14 se présente globalement sous la forme d'une plaque, avec une face d'entrée tournée du côté de la face de sortie de l'écran d'affichage 13, et une face de sortie tournée à l'opposée, par laquelle l'image est observable.

Ce filtre auto-stéréoscopique 14 pourrait se présenter sous la forme d'une barrière de parallaxe. De manière préférentielle, le filtre auto-stéréoscopique 14 se présente plutôt sous la forme d'un réseau de microlentilles convergentes offrant au moins deux points de vue distincts.

Par « points de vue distincts », on entend que le dispositif de génération d'images 11 est adapté à afficher simultanément (dans la partie 3D de l'image) deux images bidimensionnelles différentes superposées, pouvant chacune être observée de manière individuelle sous un angle différent de l'angle sous lequel on pourra observer l'autre image.

De cette manière, le conducteur pourra observer simultanément ces deux images bidimensionnelles avec ses deux yeux, de manière que son cerveau puisse reconstruire une image tridimensionnelle.

Dans un mode de réalisation préférentiel, le dispositif de génération d'images 11 de l'afficheur tête-haute 7 offrira plus de deux points de vue, à savoir huit points de vue. De cette manière, le conducteur pourra observer deux images bidimensionnelles avec ses deux yeux, non seulement lorsque sa tête est exactement positionnée dans l'axe de la lame semi-transparente 19, mais également lorsqu'elle est décalée par rapport à cet axe.

Ce filtre auto-stéréoscopique 14 est situé à distance de la face de sortie de l'écran d'affichage 13.

On peut prévoir un élément optiquement neutre interposé entre la face de sortie de l'écran d'affichage 13 et la face d'entrée du filtre auto-stéréoscopique 14, pour servir de support à ce dernier. Il peut s'agir d'une simple plaque de verre, dont les faces contre lesquelles s'appliquent le filtre auto-stéréoscopique 14 et l'écran d'affichage 13 sont planes et parallèles entre elles.

Comme cela a été expliqué ci-dessus, l'écran d'affichage 13 crée une image bidimensionnelle dont une partie 2D est prévue pour être directement observée (au travers de la plaque de décalage de plan-image 15) et dont une partie 3D est prévue pour être observée via le filtre auto-stéréoscopique 14.

On notera ici que ce filtre auto-stéréoscopique 14 ne crée pas une image tridimensionnelle mais il permet de partitionner la partie 3D de l'image de manière que les deux yeux du conducteur ne voient pas la même chose et que le cerveau du conducteur puisse reconstruire une image tridimensionnelle. C'est donc par simplification linguistique que dans cet exposé, nous parlerons de la partie 3D de l'image. On comprend donc également que la partie 3D de l'image présente de la même manière que la partie 2D de l'image un plan-image (ou « plan principal image »).

Pour que les parties 2D et 3D de l'image soient vues de manière nette par le conducteur, il est nécessaire qu'elles s'affichent dans un même et unique plan-image situé dans le plan focal du système optique de projection 17.

Or, le réseau de microlentilles du filtre auto-stéréoscopique 14 a pour effet de décaler le plan-image de la partie 3D de l'image à l'avant du plan-image de la partie 2D de l'image et c'est donc la raison pour laquelle la plaque de décalage de plan-image 15 est prévue à l'avant de la partie de la face de sortie de l'écran d'affichage 13 qui n'est pas recouverte par le filtre auto-stéréoscopique 14.

Cette plaque permet en effet de décaler le plan-image de la partie 2D de l'image, initialement situé sur la face de sortie de l'écran d'affichage 13, dans le plan-image de la partie 3D de l'image.

De cette manière l'ensemble de l'image générée par le dispositif de génération d'images 11 est située dans un seul et même plan-image.

Typiquement, la plaque de décalage de plan-image 15 est une plaque de fibres optiques (plus connu sous la dénomination anglaise « fiber optical taper »).

L'une de ses faces est située au contact de la face de sortie de l'écran d'affichage 13, tandis que sa face opposée s'étend dans le plan-image. Ce plan-image peut être situé à l'avant, au niveau ou à l'arrière du réseau de microlentilles, selon les caractéristiques de ce dernier. La plaque de décalage de plan-image 15 présente une épaisseur déterminée fonction notamment de la focale du réseau de microlentilles.

En pratique, le filtre auto-stéréoscopique 14 pourra être localisé sur une ou des zone(s) bien localisée(s) de l'écran d'affichage 13, où l'on souhaite pouvoir afficher des informations dans des plans différents du plan dans lequel les autres informations s'affichent.

Ainsi, à titre d'exemple, le filtre auto-stéréoscopique 14 pourra s'étendre sur l'ensemble d'un bord de l'écran d'affichage 13. Ce dernier comporte typiquement une succession périodique de sous-pixels de couleurs différentes : Rouges, Verts et Bleus. Chaque triplet de sous-pixels forme un pixel.

Chaque sous-pixel présente, de face, une forme rectangulaire ou, comme cela sera décrit ci-après, une forme de parallélogramme.

Chaque sous-pixel est commandé par le calculateur 6 pour transmettre vers le filtre auto-stéréoscopique 14 de la lumière avec une intensité lumineuse déterminée, la sensation colorée résultant alors du mélange des trois couleurs élémentaires dans l'œil du conducteur.

Le filtre auto-stéréoscopique 14 est quant à lui composé de microlentilles dites cylindriques. Il s'agit en pratique de lentilles profilées selon un axe vertical, de sections transversales convexes. Par exemple, les lentilles présentent une face arrière (orientée vers l'écran d'affichage 13) plane et une face avant convexe. En variante, il pourrait en être autrement.

Le réseau de microlentilles est placé devant une partie de l'écran d'affichage 13, parallèlement à celui, à une distance égale à la longueur focale des microlentilles. De la sorte, les microlentilles du réseau grossissent les points horizontalement et elles renvoient à l'infini les informations visuelles présentes sur l'écran.

Une telle structure permet d'obtenir un dispositif de génération d'images 11 qui offre un nombre de points de vue différents déterminé. Un oeil (unique) qui observe l'écran d'affichage 13 à travers le réseau de microlentilles 14 pourra, par exemple, alors voir, suivant sa position :
- soit la juxtaposition de la composante rouge d'un premier pixel, de la composante verte d'un deuxième pixel et la composante bleue d'un troisième pixel, etc. selon un premier point de vue,
- soit la juxtaposition de la composante verte du premier pixel, de la composante bleue du deuxième pixel et de la composante rouge du troisième pixel, etc. selon un deuxième point de vue,
- soit la juxtaposition de la composante bleue du premier pixel, de la composante rouge du deuxième pixel, et de la composante verte du troisième pixel, etc. selon un troisième point de vue,

- soit la juxtaposition de la composante rouge du deuxième pixel, de la composante verte du troisième pixel et de la composante bleue d'un quatrième pixel, etc. selon un quatrième point de vue TR4,
- etc. selon l'étendue de la structure.

En d'autres termes, chaque oeil du conducteur est susceptible de mélanger visuellement les composantes rouge, verte et bleue de différents pixels de l'image.

De cette façon, en commandant de manière adaptée l'intensité lumineuse émise par chaque sous-pixel, le calculateur peut afficher des images qui, par ce qu'elles ne seront pas vues sous le même angle (c'est-à-dire avec le même point de vue) par les deux yeux du conducteur, pourront être interprétées par le cerveau comme des images tridimensionnelles.

Par exemple on peut prévoir un dispositif de génération d'images 11 préférentiellement conçu pour offrir huit points de vue différents. Pour cela, on utilisera des microlentilles qui couvriront chacune huit sous-pixels.

Dans un mode de réalisation préférentiel de l'invention, les microlentilles seront allongées selon un axe vertical mais, dans des variantes elles pourraient être disposées autrement et par exemple selon un axe incliné d'un angle déterminé par rapport à l'axe vertical.

Dans un mode de réalisation particulier, chaque sous-pixel présente une forme de parallélogramme, ce qui présente une double utilité. D'une part, il s'agit de briser l'aspect vertical et continu des espaces inter sous-pixels, qui pourrait sinon être visible de près. D'autre part, il s'agit de réduire très significativement les artéfacts tels que les moirés.

Sur la figure 2, on a représenté un véhicule automobile 1 circulant sur une voie 2 de circulation dans une direction déterminée.

Le véhicule comporte à l'avant un capteur, ici un télémètre laser à balayage ou LIDAR. Un tel capteur balaie, au moyen de rayons lumineux 5, ici de type laser, la voie de circulation 2 et transmet des données correspondantes à un calculateur 6 du véhicule.

Le capteur LIDAR 4 est ici disposé en un point haut de l'avant du véhicule, derrière une fenêtre transparente au moins pour les longueurs d'ondes utilisées par le LIDAR. Le capteur LIDAR 4 produit un rayon lumineux rectiligne (généralement laser) qui est réfléchi sur le premier objet rencontré. Le rayon réfléchi est détecté par le capteur LIDAR 4 ; l'intervalle de temps entre l'émission du rayon lumineux et sa réception après réflexion permet d'estimer précisément la distance du premier objet rencontré.

Lorsque le capteur LIDAR 4 balaie la voie de circulation, le calculateur 6 peut ainsi reconstruire la topologie de cette voie de circulation et détecter des modifications locales de l'état de surface de la voie de circulation.

Le calculateur 6 traite ainsi lesdites données pour produire des informations qui sont envoyées à l'afficheur tête-haute 7 décrit en référence à la figure 1 afin que le conducteur du véhicule puisse voir les informations dans son champ de vision alors qu'il conduit en regardant la voie de circulation dans la direction de déplacement/circulation du véhicule. Comme expliqué ci-dessus, le capteur LIDAR 4 combiné avec le calculateur 6 permet de produire des informations concernant l'état de surface de la chaussée de la voie de circulation 2 et, par exemple sur la figure 2, de détecter un objet qui est un obstacle 3 qui est en relief. Cet obstacle en relief est ici un gendarme couché pour lequel une différence de hauteur locale, en valeur absolue, supérieure à un seuil a été détectée et qui, ici, a une extension dans la direction de circulation inférieure à un seuil de dimension d'objet (égal par exemple à 1 m) pour être transmis à l'afficheur tête-haute.

L'afficheur tête-haute 7 d'informations permet un affichage d'objets en 3D et, ainsi, comme représenté figure 3 à titre d'exemple, un trou détecté à la surface de la voie de circulation est affiché comme une flèche 8 3D comportant une partie en creux 9. L'affichage ainsi créé apparait en 3D au conducteur du fait que son cerveau reconstitue par construction une image en relief à partir des différentes images crées par le dispositif de génération d'images 11 de l'afficheur tête-haute 7.

Plus généralement, l'objet de l'invention est de détecter et afficher en 3D des modifications de l'état de surface de la voie de circulation qui se produisent sur une distance réduite de la chaussée de la voie de circulation, ce qui les distingue par exemple des changements de pente classiques qui sont généralement progressifs et qui sont bien supportés par les véhicules et leurs passagers. Ces modifications de l'état de surface de la voie se produisant sur une distance réduite sont donc qualifiées de modifications locales.

En outre, afin d'améliorer la détection, des seuils de détection sont mis en oeuvre. Ainsi, en cas de changement local de niveau/hauteur de la chaussée de la voie de circulation, la détection se produit si la différence de hauteur est supérieure à un seuil prédéfini de différence de hauteur. On peut ainsi détecter des trous ou des ornières qui sont en creux sur la voie ou, encore, des obstacles volontaires ou non qui sont en relief sur la voie.

On peut accessoirement noter que du fait que cette détection de différence de hauteur se fait localement, sur une distance réduite, 1 m ou moins (voire 50 cm ou moins), on obtient indirectement une information sur une possible cassure brutale de la pente de la voie de circulation et pas seulement la présence d'un creux ou d'un relief. Pour différentier une cassure brutale de pente générale de la voie de circulation d'un trou ou de tout autre type d'objet local, on peut en plus mettre en oeuvre une détection de contour basée sur la détection initiale de la modification de l'état de surface ou basée sur de simples détections long de lignes de mesures du LIDAR avec cette détection initiale et d'une détection finale plus avant. En effet, si la différence de hauteur s'inverse plus en avant de la détection initiale selon la direction de circulation et cela sur une distance réduite entre la position de la détection initiale et la détection plus avant de l'inversion, c'est-à-dire que la hauteur de la chaussée de la voie de circulation retrouve plus en avant une valeur proche ou égale de celle d'avant la détection initiale, la modification de l'état de surface peut être considérée terminée et correspondant à une ornière.

Le système de l'invention peut en outre mettre en oeuvre un moyen de reconnaissance de forme et, possiblement, d'identification, pour par exemple au moins afficher des prescriptions qui seraient marquées sur la chaussée, par exemple une limitation de vitesse, détectées du fait qu'elles créent des modifications locales d'au moins une caractéristique optique de la chaussée.

La présente invention n'est nullement limitée au mode de réalisation décrit et représenté, mais l'homme du métier saura y apporter toute variante conforme à l'invention.

Ainsi, dans une variante plus élaborée, un moyen de mesure du positionnement relatif du champ de vision du conducteur par rapport à la surface de la voie de circulation est mis en oeuvre, le champ de vision comportant l'axe de vision du conducteur, et l'information est affichée par l'afficheur tête-haute en une position telle qu'elle apparait superposée à l'objet détecté sur la voie de circulation pour le conducteur. L'information est de préférence le contour de l'objet.

On peut prévoir par ailleurs que le système comporte en outre un dispositif de restitution sonore (tel qu'un haut-parleur) et que le calculateur soit en outre configuré pour transmettre des informations sonores au dispositif de restitution sonore à détection d'une modification locale de l'état de surface de la route.

## Revendications

1. Système d'aide visuelle à la conduite pour un conducteur de véhicule automobile (1) circulant sur une voie de circulation (3) dans une direction déterminée, ledit système comportant au moins un capteur (4) télémètre laser à balayage (4) pour acquérir des données concernant la voie de circulation (2) dans la direction déterminée, un calculateur (6) configuré pour traiter les données acquises afin de produire des informations, et un afficheur tête-haute (7) d'informations dans le champ de vision du conducteur en position de conduite,
**caractérisé en ce que** le calculateur (6) est configuré pour extraire, à partir des données acquises, des informations concernant des modifications locales (3) en surface de la voie de circulation (2) et **en ce que** l'afficheur tête-haute haute (7) est conçu pour afficher au moyen d'un filtre auto-stéréoscopique (14), dans le champ de vision du conducteur, une représentation tridimensionnelle desdites informations.

2. Système selon la revendication 1, **caractérisé en ce que** lesdites modifications locales (3) sont des transitions locales dans l'état en surface de la voie de circulation se produisant dans une zone de la voie de circulation dont la dimension maximale est inférieure à une valeur déterminée dans la direction déterminée.

3. Système selon la revendication 2, **caractérisé en ce que** les transitions locales (3) se produisent dans une zone de la voie de circulation dont la dimension maximale est inférieure à 1 m dans la direction déterminée.

4. Système selon la revendication 2 ou la revendication 3, **caractérisé en ce que** les transitions locales (3) dans l'état en surface de la voie de circulation sont choisies parmi : une différence de hauteur supérieure à un seuil prédéterminé de différence de hauteur, une modification d'au moins une caractéristique optique dans ladite zone supérieure à un seuil prédéterminé de modification pour ladite au moins une caractéristique optique.

5. Système selon l'une quelconque des revendications précédentes, **caractérisé en ce que** ledit au moins un capteur (4) et le calculateur (6) sont en outre configurés pour déterminer des contours d'au moins un objet détecté par les transitions locales dans la direction déterminée, lesdits contours déterminés pouvant s'étendre latéralement à la direction déterminée.

6. Système selon la revendication 5, **caractérisé en ce que** ledit objet est un marquage signalétique au sol, ou un obstacle volontaire, ou un obstacle accidentel.

7. Système selon la revendication 5 ou la revendication 6, **caractérisé en ce que** le calculateur (6) est en outre configuré pour ne transmettre les informations à l'afficheur tête-haute (7) que pour un objet dont la dimension maximale dans la direction déterminée est inférieure à 1 mètre.

8. Système selon l'une des revendications 5 à 7, **caractérisé en ce que** l'afficheur tête haute (7) est conçu pour afficher, pour le conducteur, lesdits contours en superposition sur l'objet détecté.

9. Système selon l'une quelconque des revendications précédentes, **caractérisé en ce que** le système comporte en outre un dispositif de restitution sonore et **en ce que** le calculateur est en outre configuré pour transmettre des informations sonores au dispositif de restitution sonore.

## Patentansprüche

1. Visuelles Fahrassistenzsystem für einen Fahrer eines Kraftfahrzeugs (1), das auf einem Fahrstreifen (3) in einer bestimmten Richtung fährt, wobei das System mindestens einen Laserentfernungsmesser-Abtastsensor (4) (4), um Daten zu erfassen, die den Fahrstreifen (2) in der bestimmten Richtung betreffen, einen Rechner (6), der konfiguriert ist, die erfassten Daten zu verarbeiten, um Informationen zu erzeugen, und ein Head-up-Display (7) von Informationen im Sichtfeld des Fahrers in Fahrposition aufweist,
**dadurch gekennzeichnet, dass** der Rechner (6) konfiguriert ist, ausgehend von den erfassten Daten Informationen zu entnehmen, die lokale Veränderungen (3) an der Oberfläche des Fahrstreifens (2) betreffen, und dass das Head-up-Display (7) konzipiert ist, mittels eines autostereoskopischen Filters (14) im Sichtfeld des Fahrers eine dreidimensionale Darstellung der Informationen anzuzeigen.

2. System nach Anspruch 1, **dadurch gekennzeichnet, dass** die lokalen Veränderungen (3) lokale Übergänge im Oberflächenzustand des Fahrstreifens sind, die in einer Zone des Fahrstreifens auftreten, deren maximale Abmessung kleiner ist als ein bestimmter Wert in der bestimmten Richtung.

3. System nach Anspruch 2, **dadurch gekennzeichnet, dass** die lokalen Übergänge (3) in einer Zone des Fahrstreifens auftreten, deren maximale Abmessung in der bestimmten Richtung kleiner als 1 m ist.

4. System nach Anspruch 2 oder Anspruch 3, **dadurch gekennzeichnet, dass** die lokalen Übergänge (3) im Oberflächenzustand des Fahrstreifens gewählt werden unter: einem Höhenunterschied größer als eine vorbestimmte Höhenunterschiedsschwelle, einer Änderung mindestens eines optischen Merkmals in der Zone größer als eine vorbestimmte Änderungsschwelle für das mindestens eine optische Merkmal.

5. System nach einem der vorhergehenden Ansprüche, **dadurch gekennzeichnet, dass** der mindestens eine Sensor (4) und der Rechner (6) außerdem konfiguriert sind, um Umrisse mindestens eines erkannten Objekts durch die lokalen Übergänge in der bestimmten Richtung zu bestimmen, wobei die bestimmten Umrisse sich seitlich zur bestimmten Richtung erstrecken können.

6. System nach Anspruch 5, **dadurch gekennzeichnet, dass** das Objekt eine Hinweismarkierung am Boden oder ein absichtliches Hindernis oder ein zufälliges Hindernis ist.

7. System nach Anspruch 5 oder Anspruch 6, **dadurch gekennzeichnet, dass** der Rechner (6) außerdem konfiguriert ist, die Informationen an das Head-up-Display (7) nur für ein Objekt zu übertragen, dessen maximale Abmessung in der bestimmten Richtung kleiner als 1 m ist.

8. System nach einem der Ansprüche 5 bis 7, **dadurch gekennzeichnet, dass** das Head-up-Display (7) konzipiert ist, um dem Fahrer die Umrisse in Überlagerung auf dem erkannten Objekt anzuzeigen.

9. System nach einem der vorhergehenden Ansprüche, **dadurch gekennzeichnet, dass** das System außerdem eine Schallwiedergabevorrichtung aufweist, und dass der Rechner außerdem konfiguriert ist, akustische Informationen an die Schallwiedergabevorrichtung zu übertragen.

## Claims

1. Driving visual assistance system for a driver of a motor vehicle (1) traveling on a traffic lane (3) in a determined direction, said system comprising at least one scanning laser (4) telemetry sensor (4) for acquiring data concerning the traffic lane (2) in the determined direction, a computer (6) configured to process the acquired data in order to produce information, and a head-up display (7) of information in the visual field of the driver in the driving position,
**characterized in that** the computer (6) is configured to extract, from the acquired data, information concerning local modifications (3) on the surface of the traffic lane (2) and **in that** the head-up display (7) is designed to display, by means of a self-stereoscopic filter (14), in the visual field of the driver, a three-dimensional representation of said information.

2. System according to Claim 1, **characterized in that** said local modifications (3) are local transitions in the surface condition of the traffic lane occurring in a zone of the traffic lane whose maximum dimension is less than a determined value in the determined direction.

3. System according to Claim 2, **characterized in that** the local transitions (3) occur in a zone of the traffic lane whose maximum dimension is less than 1 m in the determined direction.

4. System according to Claim 2 or Claim 3, **characterized in that** the local transitions (3) in the surface condition of the traffic lane are chosen from among: a height difference greater than a predetermined height difference threshold, a modification of at least one optical characteristic in said zone greater than a predetermined modification threshold for said at least one optical characteristic.

5. System according to any one of the preceding claims, **characterized in that** said at least one sensor (4) and the computer (6) are further configured to determine outlines of at least one object detected by the local transitions in the determined direction, said determined outlines being able to extend laterally to the determined direction.

6. System according to Claim 5, **characterized in that** said object is a ground marking signage, or a deliberate obstacle, or an accidental obstacle.

7. System according to Claim 5 or Claim 6, **characterized in that** the computer (6) is further configured to transmit the information to the head-up display (7) only for an object whose maximum dimension in the determined direction is less than 1 metre.

8. System according to one of Claims 5 to 7, **characterized in that** the head-up display (7) is designed to display, for the driver, said outlines superposed on the detected object.

9. System according to any one of the preceding claims, **characterized in that** the system further comprises a sound rendering device and **in that** the computer is further configured to transmit sound information to the sound rendering device.
